# EUROPÄISCHE PATENTSCHRIFT

(11) **EP 0 971 167 B1**
(45) Veröffentlichungstag und Bekanntmachung des Hinweises auf die Patenterteilung: **07.12.2005**
(21) Anmeldenummer: 99112684.8
(22) Anmeldetag: 02.07.1999
(51) Int. Cl.: F21V 17/00, B60Q 1/04

(54) **Fahrzeugscheinwerfer**
Vehicle headlamp
Phare

(30) Priorität: 07.07.1998 DE 19830257
(43) Veröffentlichungstag der Anmeldung: 12.01.2000
(73) Patentinhaber: Hella KGaA Hueck & Co., 59552 Lippstadt (DE)
(72) Erfinder: Teermann,Klaus-Peter, 59555 Lippstadt (DE); Wennemers, Christian, 59494 Soest (DE)

(56) Entgegenhaltungen:
- GB-A- 214 144
- US-A- 5 353 204
- US-A- 5 735 596

## Beschreibung

Die Erfindung betrifft einen Fahrzeugscheinwerfer mit mindestens zwei Lichtfenstern, bestehend aus einem Gehäuse mit einem umlaufenden Aufnahmebett zur Aufnahme einer Abschlußscheibe und einem mindestens zwei Reflektoren seitlich abdeckenden Abdeckrahmen.

Aus dem gattungsgemässen Dokument US-A-5 353 204 ist ein Fahrzeugscheinwerfer bekannt, der ein Gehäuse, 3 Lichtöffnungen, eine innere Abdeckung, und eine transparente Abschlussscheibe aufweist. Eine Dichtungsnut im Gehäuse nimmt die Kante der Abschlussscheibe auf.

Aus der EP 0 779 475 A1 ist ein Fahrzeugscheinwerfer bekannt, der ein Gehäuse aufweist, das in Abstrahlrichtung eines in dem Gehäuse angeordneten Reflektors von einer Abschlußscheibe abgedeckt wird. Zwischen Reflektor und Abschlußscheibe ist ein den Reflektor in seinen Randbereichen abdeckender Abdeckrahmen angeordnet. Reflektoren, die um zwei senkrecht zueinander angeordnete Achsen verschwenkbar sind, benötigen zwischen den sie umgebenden Gehäuse einen Zwischenraum. Um unerwünschte Einblicke in den Scheinwerfer, insbesondere bei optiklosen Abschlußscheiben zu verhindern, werden die Zwischenräume mit einem Abdeckrahmen abgedeckt. Der Abdeckrahmen ist über mehrere Beinchen, die in das Aufnahmebett des Gehäuses hineinragen, mit diesem verbunden.

Nachteilig dabei ist, daß bei Verwendung des aus der EP 0 779 475 A1 bekannten Scheinwerfers als Fahrzeugscheinwerfer mit zwei Lichtfenstern, wie er beispielsweise aus der DE 195 17 783 C2 bekannt ist, es in einem zwischen den Lichtfenstern angeordneten Mittenbereich zu einer unerwünschten Schwingungsbildung des Abdeckrahmens und zu einem Auftreten von Klappergeräuschen kommen kann. Dem kann zwar grundsätzlich durch eine entsprechend hohe Anzahl von Beinchen begegnet werden, hat dann aber zur Folge, daß die Montage entsprechend aufwendiger wird.

Aufgabe der vorliegenden Erfindung ist es daher, den bekannten Scheinwerfer so zu verbessern, daß eine Schwingungsbildung des Abdeckrahmens und Klappergeräusche vermieden werden und die Montage einfach und kostengünstig erfolgen kann.

Die Aufgabe wird erfindungsgemäß dadurch gelöst, daß der Abdeckrahmen in einem zwischen den Lichtfenstern angeordneten Mittenbereich ein an eine Rückseite der Abschlußscheibe federnd anlegbares Federelement aufweist.

Dadurch, daß der Mittenbereich über sein Federelement gegen die Rückseite der Abschlußscheibe federnd angelegt wird, wird der Abdeckrahmen praktisch von der Abschlußscheibe in dem Gehäuse festgeklemmt. Durch das federnde Anliegen des Abdeckrahmens an der Abschlußscheibe kann eine Schwingungsbildung als Ursache für das Auftreten von Klappergeräuschen zuverlässig vermieden werden. Dadurch kann auch auf eine Erhöhung der Zahl der Befestigungsbeinchen bzw. Haltelaschen des Abdeckrahmens verzichtet werden, so daß die Montage nicht aufwendiger wird.

Gemäß einer bevorzugten Ausführungsform der Erfindung ist das Federelement als Zunge ausgebildet, die mit einem festen Ende in den Mittenbereich des Abdeckrahmens übergeht und deren dem festen Ende abgewandtes freies Ende gegenüber dem festen Ende federnd ausgebildet ist. Das freie Ende weist dabei quer zu seiner Längsrichtung eine an die Rückseite der Anschlußscheibe anlegbare konvexe Anlagewölbung auf.

Durch die gewählte zungenförmige Ausbildung des Federelementes wird ein relativ stabiles großflächiges Federelement erzielt, das entsprechend großflächig bzw. mit einer Linienberührung einer konvexen Anlagewölbung an der Abschlußscheibe anliegt.

Nach einer weiteren bevorzugten Ausführungsform der Erfindung weist der Mittenbereich des Abdeckrahmens mindestens in einem dem freien Ende der Zunge benachbarten Bereich eine Stützrippe auf.

Durch die Verwendung einer Stützrippe wird ebenfalls die Stabilität des Abdeckrahmens erhöht.

Gemäß einer weiteren bevorzugten Ausführungsform der Erfindung weist der Abdeckrahmen drei an seinem dem Aufnahmebett benachbarten Rand angeordnete Haltelaschen auf, die in entsprechende Aufnahmen des Aufnahmebettes des Gehäuses einsetzbar sind. Die Haltelaschen sind abgekröpft und weisen auf ihrer der Aufnahme abgewandten Seite eine Stützfläche auf, auf der ein dem Aufnahmebett zugewandter Rand der Abschlußscheibe aufsetzbar ist

Durch die Verwendung von nur drei Haltelaschen wird die Montage gegenüber von bekannten Scheinwerfern mit mindestens vier Haltelaschen erheblich vereinfacht, da die minimierte Zahl von Haltelaschen das problemlose Einlegen des Abdeckrahmens in das Gehäuse fördert.

Nach einer weiteren bevorzugten Ausführungsform der Erfindung weist der Abdeckrahmen quer zur Abstrahlrichtung an seiner Außenwandung Abstützbeine auf, deren freie Enden an einer der Außenwandung benachbarten Innenwandung der Abschlußscheibe abstützbar sind.

Durch die Abstützbeine wird der Abdeckrahmen in seiner Fixierung unterstützt und das Auftreten von Klappergeräuschen quer zur Abstrahlrichtung vermieden.

Weitere Einzelheiten der Erfindung ergeben sich aus der nachfolgenden ausführlichen Beschreibung und den beigefügten Zeichnungen, in denen bevorzugte Ausführungsformen der Erfindung beispielsweise veranschaulicht sind.

In den Zeichnungen zeigen:

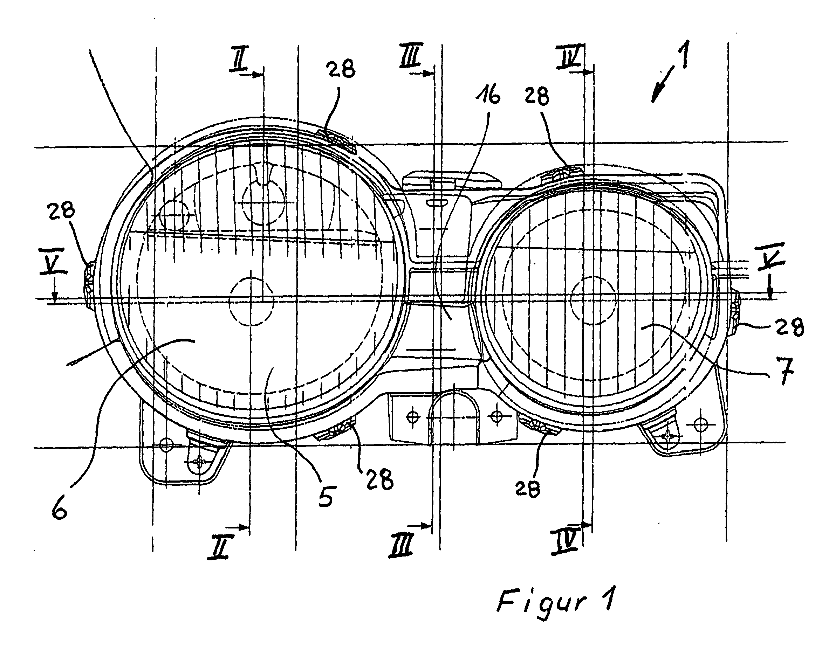

- Figur 1:: Eine Vorderansicht eines Fahrzeugscheinwerfers,

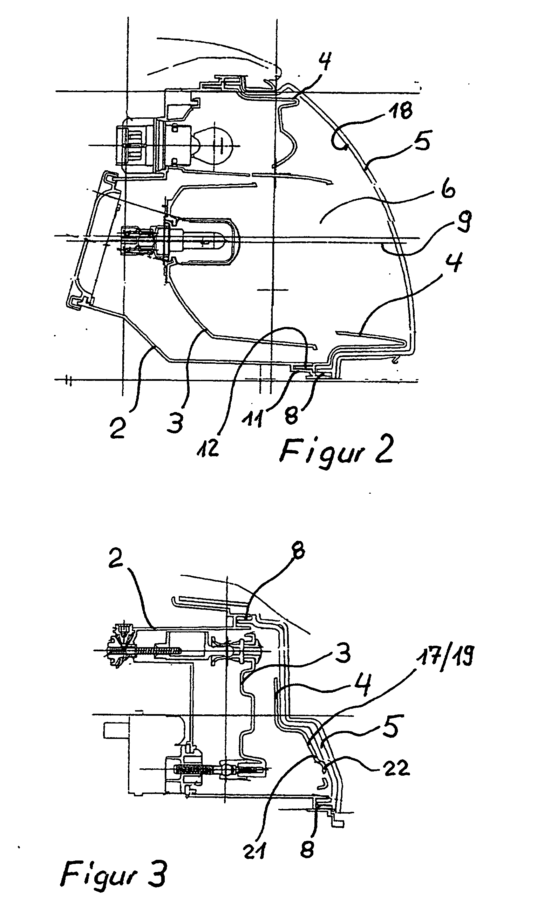

- Figur 2:: eine Seitenansicht des Fahrzeugscheinwerfers von Figur 1 entlang der Linie II - II geschnitten,
- Figur 3:: eine Seitenansicht des Fahrzeugscheinwerfers von Figur 1 entlang der Linie III - III geschnitten,

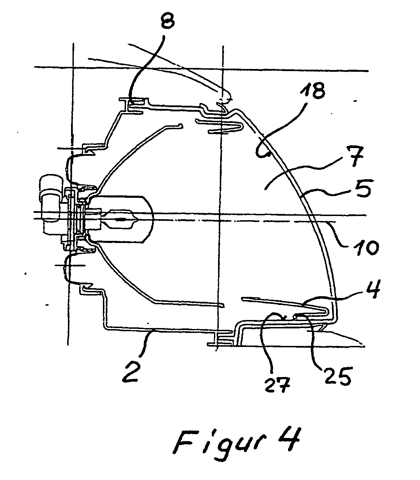

- Figur 4:: eine Seitenansicht des Fahrzeugscheinwerfers von Figur 1 entlang der Linie IV - IV geschnitten,

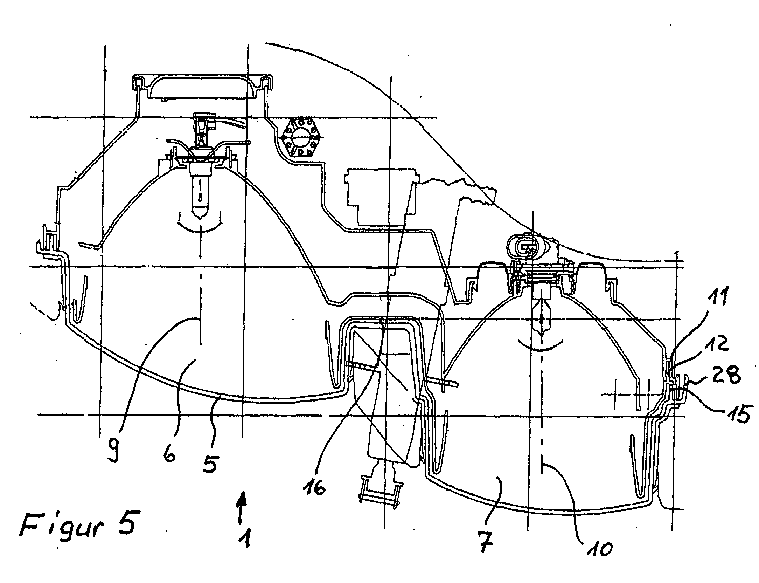

- Figur 5:: eine Draufsicht auf den Fahrzeugscheinwerfer von Figur 1 entlang der Linie V - V geschnitten und

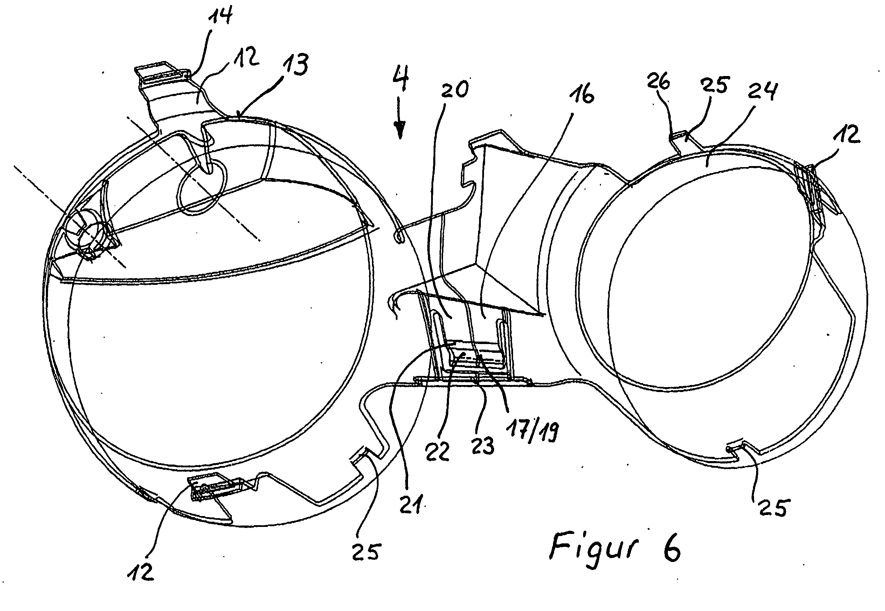

- Figur 6:: eine schematische räumliche Darstellung eines Abdeckrahmes.

Ein Fahrzeugscheinwerfer (1) besteht im wesentlichen aus einem Gehäuse (2), einem Reflektor (3), einem Abdeckrahmen (4) und einer Abschlußscheibe (5).

Der Fahrzeugscheinwerfer (1) ist als Doppelscheinwerfer mit zwei in einem Abstand zueinander angeordneten Lichtfenstern (6, 7) ausgebildet. Der Reflektor (3) ist in dem Gehäuse (2) um zwei senkrecht zueinander angeordnete Achsen verstellbar angeordnet. In Abstrahlrichtung werden die außerhalb der Lichtfenster(6, 7) liegenden Bereiche des Reflektors (3) zum Gehäuse (2) hin von dem Abdeckrahmen (4) abgedeckt.

Das Gehäuse (2) weist zur Abschlußscheibe (5) hin ein umlaufendes Aufnahmebett (8) auf. Etwa parallel zur Abstrahlrichtung bzw. zu den optischen Achsen (9, 10) des Reflektors (3) bzw. der Lichtfenster (6, 7) weist das Aufnahmebett (8) drei Aufnahmen (11) für Haltelaschen (12) des Abdeckrahmens (4) auf. Zwei Aufnahmen (11) sind im Bereich des größeren Lichtfensters (6) und eine Aufnahme (11) ist im Bereich des kleineren Lichtfensters (7) angeordnet.

Die Haltelaschen (12) sind an einem dem Aufnahmebett (8) benachbarten Rand (13) des Abdeckrahmens (4) angeordnet. Die Haltelaschen (12) sind nach außen, d. h. von den optischen Achsen (9, 10) weg abgekröpft und weisen auf ihrer der Aufnahme (11) abgewandten Seite eine Stützfläche (14) auf, auf der ein dem Aufnahmebett (8) zugewandter Rand (15) der Abschlußscheibe (5) aufsetzbar ist.

In einem zwischen den Lichtfenstern (6, 7) angeordneten Mittenbereich (16) weist der Abdeckrahmen (4) ein Federelement (17) auf, das gegen eine dem Reflektor (3) zugewandte Rückseite (18) der Abschlußscheibe (5) federnd anlegbar ist. Das Federelement (17) ist als Zunge (19) ausgebildet, die mit einem festen Ende (20) in den Mittenbereich (16) des Abdeckrahmens (4) übergeht und deren dem festen Ende (20) abgewandtes freies Ende (21) gegenüber dem festen Ende (20) federnd ausgebildet ist. Das freie Ende (21) weist quer zu seiner in einer nicht dargestellten vertikalen Ebene liegenden Längsrichtung eine an die Rückseite (18) der Abschlußscheibe (5) anlegbare konvexe Anlagewölbung (22) auf. An dem freien Ende (21) der Zunge (19) benachbarten Bereich weist der Abdeckrahmen (4) eine Stützrippe (23) auf.

Der Abdeckrahmen (4) weist quer zur Abstrahlrichtung an seiner Außenwandung (24) Abstützbeine (25) auf, deren freie Enden (26) an einer der Außenwandung (24) benachbarten Innenwandung (27) der Abschlußscheibe (5) abstützbar sind.

Zur Montage des Fahrzeugscheinwerfers (1) wird zunächst in üblicher Weise der Reflektor (3) in das Gehäuse (2) eingesetzt. Der Abdeckrahmen (4) wird mit seinen Haltelaschen (12) in die Aufnahmen (11) des Aufnahmebettes (8) eingesteckt. Anschließend wird die Abschlußscheibe (5) über den Abdeckrahmen (4) mit ihren Rand (15) in das Aufnahmebett (8) eingesetzt. Dabei drückt der Rand (15) auf die Stützfläche (14) der Haltelaschen (12).

Durch eine in das Aufnahmebett (8) eingebrachte Dichtungsmasse, nämlich einen sogenannten Hot-Melt- bzw. Heißkleber, sind die Abschlußscheibe (5) und das Gehäuse (2) gegeneinander abgedichtet. Die Abschlußscheibe (5) weist an ihrem Umfang sechs Rastarme (28) auf, die mit entsprechenden nicht dargestellten Rastteilen des Gehäuses (2) verrasten.

## Patentansprüche

1. Fahrzeugscheinwerfer mit mindestens zwei Lichtfenstern, bestehend aus einem Gehäuse mit einem umlaufenden Aufnahmebett zur Aufnahme einer Abschlußscheibe und einem mindestens zwei Reflektoren seitlich abdeckenden Abdeckrahmen, **dadurch gekennzeichnet, daß** der Abdeckrahmen (4) in einem zwischen den Lichtfenstern (6, 7) angeordneten Mittenbereich (16) ein an eine Rückseite der Abschlußscheibe (5) federnd anlegbares Federelement (17) aufweist.

2. Fahrzeugscheinwerfer nach Anspruch 1, **dadurch gekennzeichnet, daß** das Federelement (17) als Zunge (19) ausgebildet ist, die mit einem festen Ende (20) in den Mittenbereich (16) des Abdeckrahmens (4) übergeht und deren dem festen Ende (20) abgewandtes freies Ende (21) gegenüber dem festen Ende (20) federnd ausgebildet ist.

3. Fahrzeugscheinwerfer nach Anspruch 2, **dadurch gekennzeichnet, daß** das freie Ende (21) quer zu seiner Längsrichtung eine an die Rückseite (18) der Abschlußscheibe (5) anlegbare konvexe Anlagewölbung (22) aufweist.

4. Fahrzeugscheinwerfer nach Anspruch 2 oder 3, **dadurch gekennzeichnet, daß** der Mittenbereich (16) des Abdeckrahmens (4) mindestens in einem dem freien Ende (21) der Zunge (19) benachbarten Bereich eine Stützrippe (23) aufweist.

5. Fahrzeugscheinwerfer nach Anspruch 4, **dadurch gekennzeichnet, daß** die Stützrippe (23) mit einem entgegen der Abstrahlrichtung gerichteten Ende an dem Gehäuse (2) abstützbar ist.

6. Fahrzeugscheinwerfer nach einem der Ansprüche 1 bis 5, **dadurch gekennzeichnet, daß** der Abdeckrahmen (4) quer zur Abstrahlrichtung an seiner Außenwandung (24) Abstützbeine (25) aufweist, deren freie Enden an einer der Außenwandung (24) benachbarten Innenwandung (27) der Abschlußscheibe (5) abstützbar sind.

7. Fahrzeugscheinwerfer nach einem der Ansprüche 1 bis 6, **dadurch gekennzeichnet, daß** der Abdeckrahmen (4) mit mindestens zwei an seinem dem Aufnahmebett (8) benachbarten Rand (13) angeordneten Haltelaschen (12) in entsprechende Aufnahmen (11) des Aufnahmebettes (8) einsetzbar ist.

8. Fahrzeugscheinwerfer nach Anspruch 7, **dadurch gekennzeichnet, daß** der Abdeckrahmen (4) mit drei Haltelaschen (12) in die Aufnahmen (11) des Aufnahmebettes (8) einsetzbar ist.

9. Fahrzeugscheinwerfer nach Anspruch 7 oder 8, **dadurch gekennzeichnet, daß** die Haltelaschen (12) abgekröpft sind und auf ihrer der Aufnahme (11) abgewandten Seite eine Stützfläche (14) aufweisen, auf der ein dem Aufnahmebett (8) zugewandter Rand (15) der Abschlußscheibe (5) aufsetzbar ist.

10. Fahrzeugscheinwerfer nach einem der Ansprüche 1 bis 9, **dadurch gekennzeichnet, daß** die Abschlußscheibe (5) und das Gehäuse (2) im Aufnahmebett durch Dichtungsmasse gegeneinander abgedichtet sind.

## Claims

1. Vehicle headlamp having at least two windows for light, comprising a housing having a surrounding receiving bed for receiving a closing-off lens and having a covering frame which covers at least two reflectors laterally, **characterised in that** the covering frame (4) has, in a central region (16) arranged between the windows (6, 7) for light, a resilient member (17) which can be resiliently applied to a rear face of the closing-off lens (5).

2. Vehicle headlamp according to claim 1, **characterised in that** the resilient member (17) is in the form of a tongue (19) of which a fixed end (20) merges into the central region (16) of the covering frame (4) and whose free end (21) remote from the fixed end (20) is formed to be resilient relative to the fixed end (20).

3. Vehicle headlamp according to claim 2, **characterised in that** the free end (21) has, transversely to its longitudinal direction, a convex curvature (22) for application which can be applied to the rear face of the closing-off lens (5).

4. Vehicle headlamp according to claim 2 or 3, **characterised in that** the central region (16) of the covering frame (4) has, at least in a region adjacent the free end (21) of the tongue (19) a support rib (23).

5. Vehicle headlamp according to claim 4, **characterised in that** the support rib (23) can be supported on the housing (2) by an end which is directed in the opposite direction from the direction of light emission.

6. Vehicle headlamp according to one of claims 1 to 5, **characterised in that** the covering frame (4) has, on its outer wall (24), transversely to the direction of light emission, support legs (25) whose free ends can be supported against an inner wall (27) of the closing-off lens (5), which inner wall (27) is adjacent the outer wall (24).

7. Vehicle headlamp according to one of claims 1 to 6, **characterised in that** the covering frame (4) can be inserted in corresponding receptacles (11) in the receiving bed (8) by at least two retaining tabs (12) arranged on its edge (13) which is adjacent the receiving bed (8).

8. Vehicle headlamp according to claim 7, **characterised in that** the covering frame (4) can be inserted in the receptacles (11) in the receiving bed (8) by three retaining tabs (12).

9. Vehicle headlamp according to claim 7 or 8, **characterised in that** the retaining tabs (12) are cranked and have, on their side remote from the receptacle (11), a supporting face (14) against which can be placed an edge (15) of the closing-off lens (5) which is remote from the receiving bed (8).

10. Vehicle headlamp according to one of claims 1 to 9, **characterised in that** the closing-off lens (5) and the housing (2) are sealed off from one another in the receiving bed by sealing compound.

## Revendications

1. Phare de véhicule comportant au moins deux fenêtres de lumière, constitué par un boîtier avec un lit de réception périphérique pour recevoir une plaque de fermeture et un cadre de recouvrement recouvrant latéralement au moins deux réflecteurs, **caractérisé en ce que** le cadre de recouvrement (4) présente dans une région médiane (16) agencée entre les fenêtres de lumière (6, 7) un élément à effet de ressort (17) susceptible d'être appliqué de manière élastique sur une face postérieure de la plaque de fermeture (5).

2. Phare de véhicule selon la revendication 1, **caractérisé en ce que** l'élément à effet de ressort (17) est réalisé sous forme de languette (19) qui se transforme avec une extrémité fixe (20) en la région médiane (16) du cadre de recouvrement (4) et dont l'extrémité libre (21) détournée de l'extrémité fixe (20) est réalisée de manière élastique par rapport à l'extrémité fixe (20).

3. Phare de véhicule selon la revendication 2, **caractérisé en ce que** l'extrémité libre (21) présente transversalement à sa direction longitudinale un bombement d'appui (22) convexe susceptible d'être mis en appui sur la face postérieure (18) de la plaque de fermeture (5).

4. Phare de véhicule selon l'une ou l'autre des revendications 2 et 3, **caractérisé en ce que** la région médiane (16) du cadre de recouvrement (4) présente une nervure de soutien (23) dans au moins une région voisine de l'extrémité libre (21) de la languette (19).

5. Phare de véhicule selon la revendication 4, **caractérisé en ce que** la nervure de soutien (23) peut être mise en appui sur le boîtier (2) par une extrémité orientée dans le sens contraire à la direction de rayonnement.

6. Phare de véhicule selon l'une des revendications 1 à 5, **caractérisé en ce que** le cadre de recouvrement (4) présente transversalement à la direction de rayonnement sur sa paroi extérieure (24) des jambes de soutien (25) dont les extrémités libres peuvent prendre appui sur une paroi intérieure (27) de la plaque de fermeture (5), qui est voisine de la paroi extérieure (24).

7. Phare de véhicule selon l'une des revendications 1 à 6, **caractérisé en ce que** le cadre de recouvrement (4) peut être inséré avec au moins deux pattes de retenue (12) agencées sur son bord (13) voisin du lit de réception (8), dans des logements (11) correspondants du lit de réception (8).

8. Phare de véhicule selon la revendication 7, **caractérisé en ce que** le cadre de recouvrement (4) peut être inséré avec trois pattes de retenue (12) dans les logements (11) du lit de réception (8).

9. Phare de véhicule selon l'une ou l'autre des revendications 7 et 8, **caractérisé en ce que** les pattes de retenue (12) sont coudées et présentent sur leur côté détourné du logement (11) une surface d'appui (14) sur laquelle peut être posé un bord (15) de la plaque de fermeture (5), tourné vers le lit de réception (8).

10. Phare de véhicule selon l'une des revendications 1 à 9, **caractérisé en ce que** la plaque de fermeture (5) et le boîtier (2) sont étanchéifiés l'un par rapport à l'autre dans le lit de réception par une masse d'étanchéité.
